# EUROPÄISCHE PATENTSCHRIFT

(11) **EP 1 595 627 B1**
(45) Veröffentlichungstag und Bekanntmachung des Hinweises auf die Patenterteilung: **09.04.2008**
(21) Anmeldenummer: 05103361.1
(22) Anmeldetag: 26.04.2005
(51) Int. Cl.: B23B 47/28

(54) **Bohrlehre für Eckverbindungen**
Drilling jig for corner joints
Gabarit de perçage pour les joints d'angle

(30) Priorität: 12.05.2004 DE 102004023343
(43) Veröffentlichungstag der Anmeldung: 16.11.2005
(73) Patentinhaber: wolfcraft GmbH, 56746 Kempenich (DE)
(72) Erfinder: Degen, Klemens, 56745 Weibern (DE)
(74) Vertreter: Grundmann, Dirk

(56) Entgegenhaltungen:
- DE-A1- 3 741 439
- FR-A- 2 816 226
- US-A- 4 257 166
- US-A- 5 676 500
- US-A1- 2002 106 253
- US-A1- 2003 123 941
- US-B1- 6 599 064

## Beschreibung

Die Erfindung betritt eine Bohrlehre gemäß Gattungsbegriff des Anspruches 1.

Eine derartige Bohrlehre ist aus der US 200/0123941 bekannt. Diese Schrift beschreibt eine Bohrlehre zum Fertigen von Schrägbohrungen zur Verbindung zweier Werkstücke miteinander. Sie besitzt einen von einem Aluminiumprofil gebildeten Basiskörper, der einem Schlittenträger entspricht. Das Basiselement soll mittels zweier Spannbacken an den beiden Werkstücken befestigt werden. Auf dem Basiskörper befindet sich ein Schlitten, der mittels einer Klemmschraube in verschiedenen Positionen auf dem Basiskörper fixiert werden kann. Im Schlitten befinden sich Längskanäle zur Führung eines Bohrers.

Aus der US 6,599,064 B1 ist eine Bohrlehre mit einer Befestigungsvorrichtung für eine Bohrmaschine bekannt. Die Bohrlehre besitzt einen Anschlag, dieser wird von einer Platte ausgebildet, die stirnseitig an zwei Stäben sitzt, die über Klemmschrauben an dem Grundgestell der Bohrlehre befestigt sind.

Aus der US 2002/01606253 A1 ist eine Bohrschablone zum Anbringen von Kreuzplatten von Topfbändern bekannt.

Aus der US 4,257,166 ist eine Bohrlehre bekannt, die im Eckbereich an einem Werkstück in unterschiedlichen Abständen zur Werkstückkante angelegt werden kann. Hierzu dienen auf einer Gewindestange angeordnete Anschlagscheiben, wobei die Anschlagscheiben exzentrische Bohrungen aufweisen, durch welche die Gewindestange ragt.

Die DE 3741439 A1 betrifft eine Führungsvorrichtung für eine motorisch betriebene Bohreinrichtung. Eine Profilschiene bildet eine Art Schlittenträger, auf dem ein Schlitten läuft, der in verschiedenen Abstandspositionen mit der Schiene verrastet werden kann. Diese Vorrichtung dient zur Herstellung von Lochreihen.

Aus der US 5,676,500 ist eine Bohrlehre bekannt. Dort sind schräge Führungsöffnungen für einen Bohrer vorgesehen.

Die FR 2816226 beschreibt eine Bohrlehre ebenfalls mit Führungsöffnungen zum Durchtritt eines Bohrers. Diese Bohrlehre besitzt einen Schlitten, der an einer rechteckigen Führungsleiste gleitend befestigt ist. Über eine Rändelmutter kann eine Klemmverbindung mit der Führungsschiene eingegangen werden, so dass der Schlitten an verschiedenen Positionen festlegbar ist.

Der Erfindung liegt die Aufgabe zugrunde, eine gattungsgemäße Bohrlehre gebrauchsvorteilhaft weiterzubilden.

Gelöst wird die Aufgabe durch die in den Ansprüchen angegebene Erfindung. Es ist ein dem Schlittenträger zugeordneter, mit Rastnischen versehener Längsschlitz vorgesehen, welcher von einem von der Breitseite des Schlittens her zu betätigenden Raststift durchgriffen ist. Es ist ein Rastkopf vorgesehen, der in einer der Rastnischen einliegt. Der Rastkopf kann durch Druck auf einen Drucktaster gegen die Rückstellkraft einer Feder aus der Rastnische heraus verlagert werden. Durch Verlagerung des Schlittens auf dem Schlittenträger können die Führungskanäle in eine andere Abstandsposition zur Kante zwischen Breitseitenfläche und Verbindungsfläche gebracht werden, um so die Bohrlehre auf unterschiedliche Materialstärken des ersten Werkstückes einzustellen. In einer bevorzugten Weiterbildung der Erfindung ist ein Schwenkanschlag vorgesehen, dieser ist an der zum Rand der Anlagefläche weisenden Stirnseite des Schlittenträgers angeordnet. In einer Anschlagstellung kann der Schwenkanschlag gegen die Verbindungsfläche gebracht werden. In einer zurückgeschwenkten Stellung kann der Schwenkanschlag beispielsweise in Fluchtlage zur Verbindungsfläche gebracht werden. Er kann dann beispielsweise gegen die Breitseitenfläche eines zweiten Werkstücks angelegt werden, welches in flächiger Anlage zur Verbindungsfläche liegt. Die erfindungsgemäße Bohrlehre kann zwei parallele Führungskanäle aufweisen. Der Schlitten kann dementsprechend zwei längsschlitzartige Durchtrittsöffnungen für den Bohrer aufweisen. In einer bevorzugten Weiterbildung der Erfindung liegt zwischen den beiden längsschlitzartigen Durchtrittsöffnungen ein mit Rastnischen versehener Längsschlitz. Ferner kann vorgesehen sein, dass die in verschiedene Abstandslage zum Schwenkanschlag angeordneten Rastnischen zur Anlagefläche hin offen sind und der Rastkopf des Rastzapfens zum Austritt aus der Rastnische die Anlagefläche kreuzen muss. Hierdurch ist sichergestellt, dass bei auf der Breitseitenfläche des Werkstückes aufliegender Bohrlehre die Verrastung nicht aufgehoben werden kann. Auf dem Schlitten oder dem Schlittenträger können Markierungen zur Kennzeichnung der Materialstärke des zu bearbeitenden Werkstückes vorgesehen sein. Dies erleichtert das Voreinstellen der Schiebestellung des Schlittens auf dem Schlittenträger. Innerhalb der Führungskanäle können Metallbüchsen vorgesehen sein. Zufolge dieser Metallbüchsen ist zumindest der Einsteckbereich des Führungskanals mit einem harten Werkstoff ausgekleidet. Dies vermindert den Verschleiß. Der Schwenkanschlag kann zwei Durchtrittsaussparungen für die Bohrer aufweisen. Dies ist dann erforderlich, wenn das erste Werkstück eine geringe Materialstärke aufweist bzw. die Verbindungsschraube dicht am Rand angeordnet sein soll. Der Schlitten kann randseitig geführt sein. Der den Längsschlitz durchgreifende Rastzapfen kann mit dem Ende des Längsschlitzes einen Bewegungsanschlag für den Schlitten ausbilden. Auch der Schwenkanschlag kann einen Bewegungsanschlag für den Schlitten ausbilden. Zur vereinfachten Montage von Schlitten auf Schlittenträger kann eine schlüssellochförmige Öffnung im Endbereich des Längsschlitzes vorgesehen sein, durch welche der Rastkopf des Rastzapfens bei der Montage von Schlitten und Schlittenträger durchsteckbar ist.

Ein Ausführungsbeispiel der Erfindung wird nachfolgend anhand beigefügter Zeichnungen erläutert. Es zeigen:

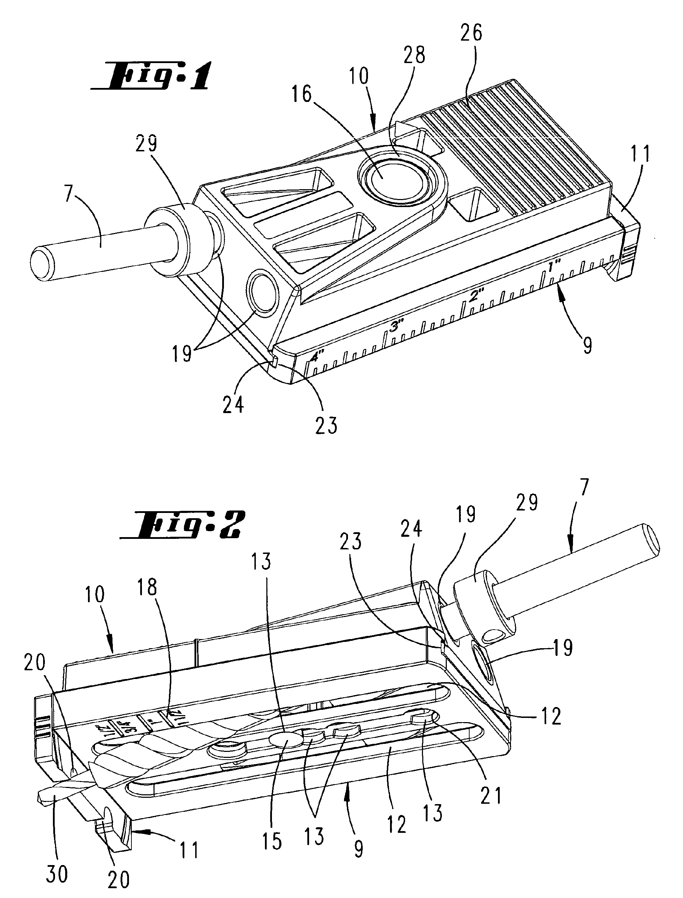

- Fig.1: in perspektivischer Ansicht das Ausführungsbeispiel der Erfindung,
- Fig. 2: in perspektivischer Unteransicht das Ausführungsbeispiel der Erfindung,
- Fig. 3: einen Schnitt durch eine mit dem in den Figuren 1 und 2 dargestellten Ausführungsbeispiel gefertigte Eckverbindung,
- Fig. 4: in explosionsartiger Darstellung die Einzelteile der Bohrlehre gemäß Ausführungsbeispiel,

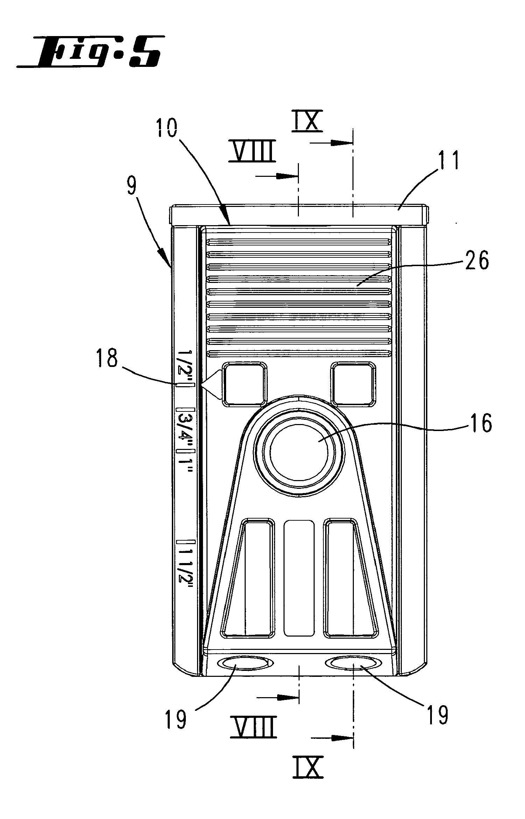

- Fig. 5: eine Draufsicht auf die Bohrlehre,

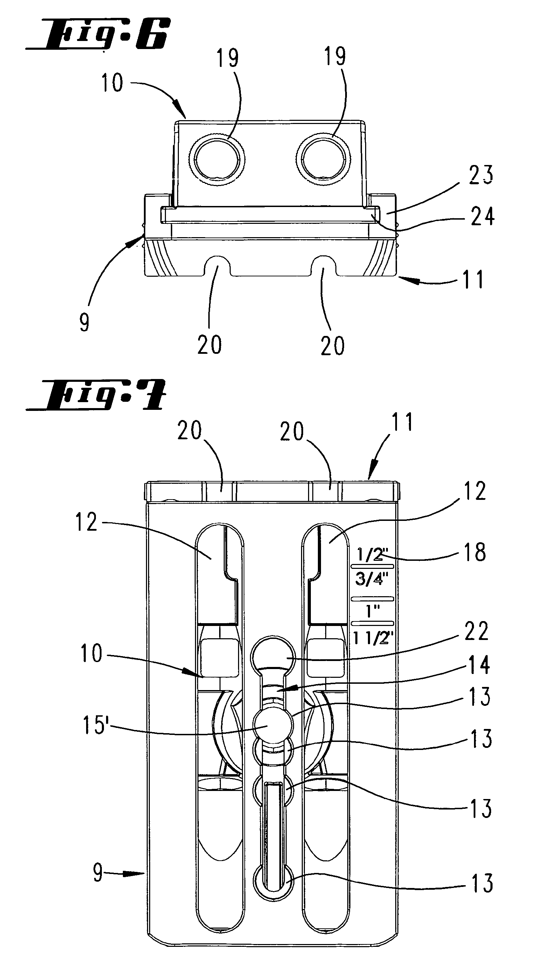

- Fig. 6: eine Frontansicht des Ausführungsbeispiels mit in einer Anschlagstellung verschwenktem Schwenkanschlag,
- Fig. 7: eine Unteransicht des Ausführungsbeispiels,
- Fig. 8: einen Schnitt gemäß der Linie VIII-VIII in Figur 5,.
- Fig. 9: einen Schnitt gemäß de Linie IX-IX in Figur 5,

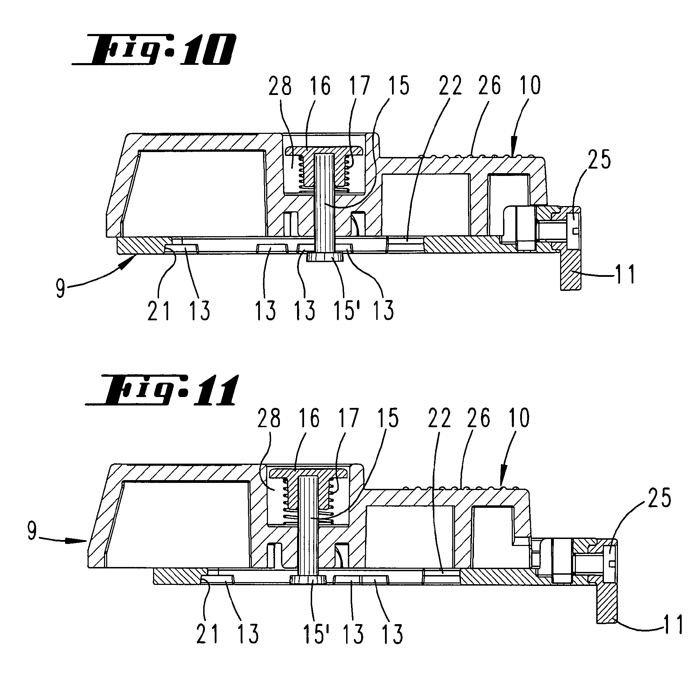

- Fig.10: einen Schnitt gemäß der Figur 8 mit entrastetem Rastkopf,
- Fig.11: einen Schnitt gemäß Figur 8 mit gegenüber dem Schlittenträger verschobenem Schlitten,

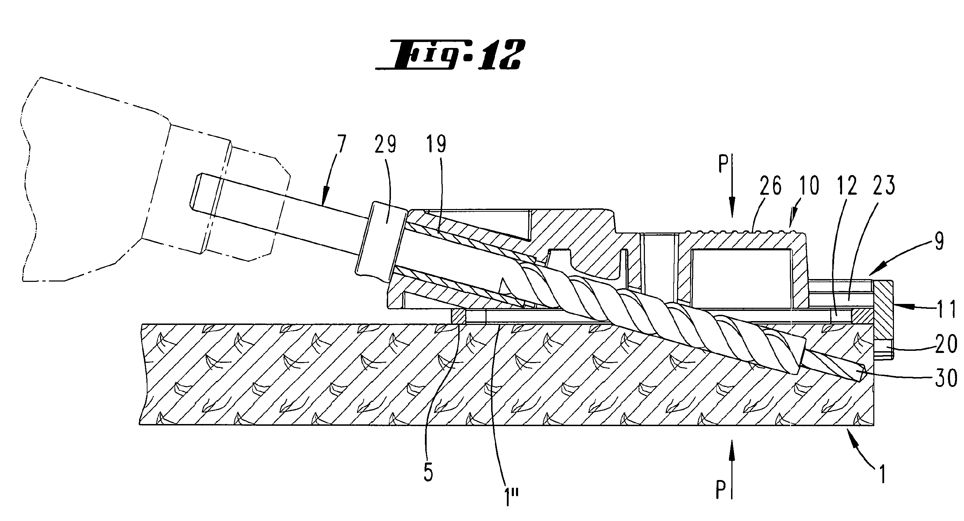

- Fig.12: einen Schnitt gemäß Figur 9 in einer anderen Raststellung des Schlittens gegenüber dem Schlittenträger und in Anschlagstellung an einem Wertstück,

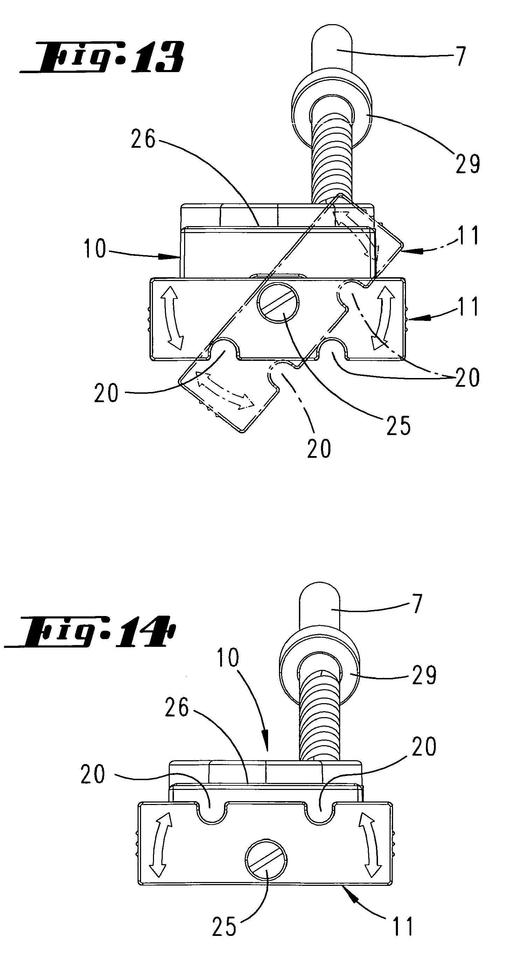

- Fig.13: eine Frontansicht zur Demonstration der Schwenbkarkeit des Schwenkanschlages,
- Fig. 14: eine Darstellung gemäß Figur 13 mit außer Anschlagstellung gebrachtem Schwenkanschlag und
- Fig. 15: eine zweite Anschlagstellung an einem ersten Werkstück, welches stumpf gegen ein zweites Werkstück gelegt ist, wobei das zweite Werkstück eine Anschlagfläche für die Frontseite des Schwenkanschlages 20 bildet.

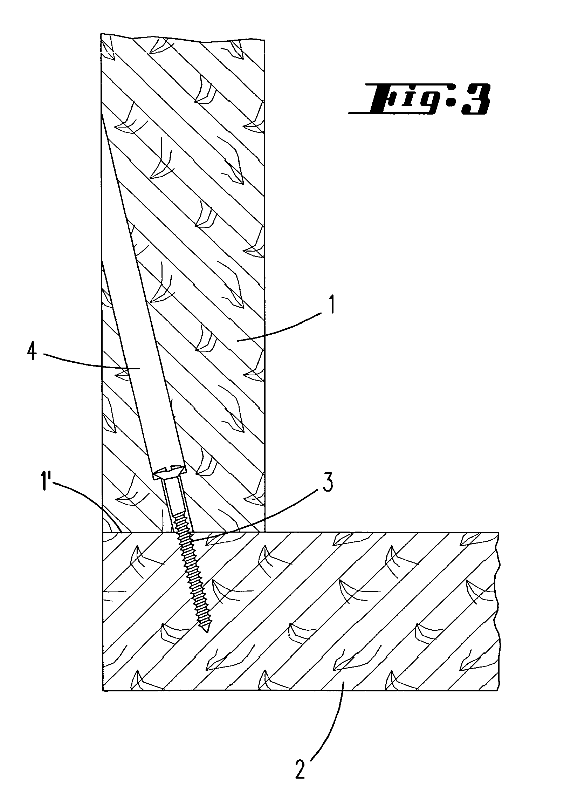

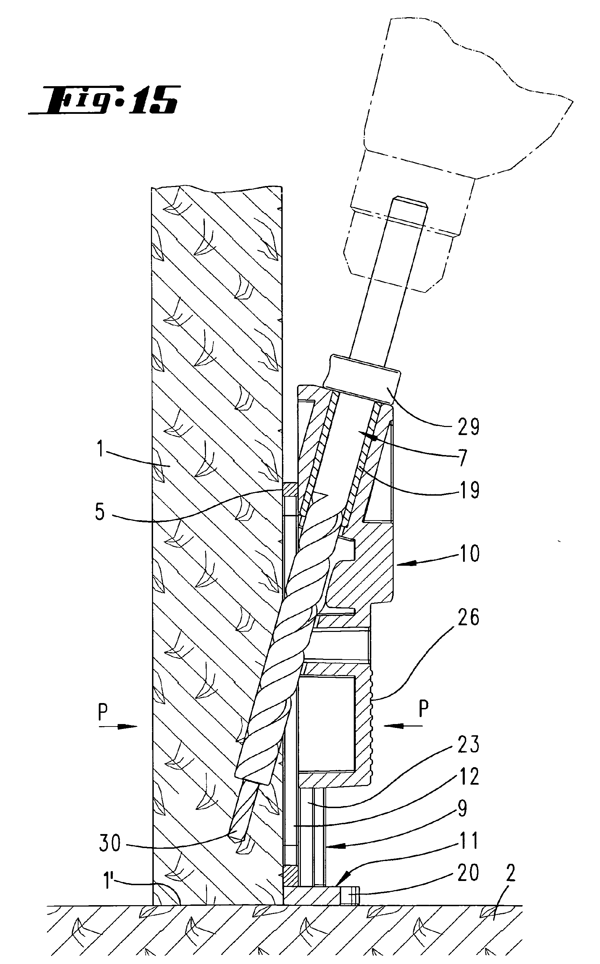

Die in den Zeichnungen dargestellte Vorrichtung dient dazu, spitzwinklig in die Breitseite eines Werkstückes Löcher zu bohren. Es handelt sich dabei um Sacklöcher, deren Durchmesser größer ist als der Schraubenkopfdurchmesser einer in die Sackbohrung einzuschraubende Schraube. Der Boden der Bohrung bildet eine durchmesserverminderte Findungsöffnung für die Spitze der Schraube. Diese Findungsöffnung kann sich bis zur Schmalseite 1' des Werkstückes 1 fortsetzen. Mit der in die Bohrung 4 eingesteckten oder geschraubten Schraube 3 kann das Werkstück 1 stumpfwinklig, insbesondere rechtwinklig mit einem zweiten Werkstück 2 entweder wie in Figur 3 dargestellt als Eckverbindung oder wie in der Figur 15 dargestellt, verbunden werden. Die Schraube soll dabei etwa in der Mitte der Schmalseitenfläche 1' austreten, um in die Breitseitenfläche des zweiten Werkstückes eingeschraubt werden zu können.

Damit können dann aber nicht nur Eckverbindungen hergestellt werden. Die Fläche 1' kann auch in Anlage an eine Schmalseite eines zweiten Werkstückes gebracht werden, um beispielsweise ein Brett zu verlängern.

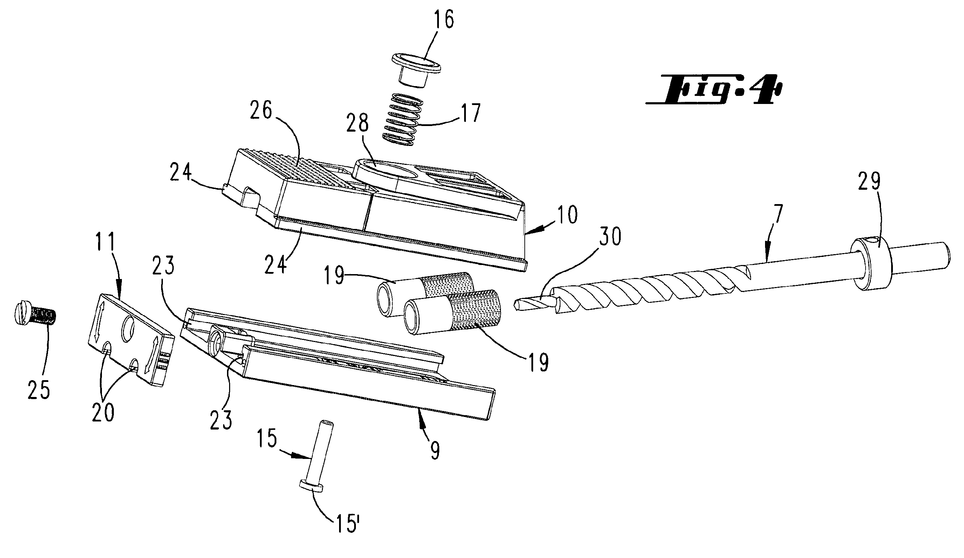

Wie insbesondere aus der Figur 4 hervorgeht, besitzt die Bohrlehre einen Schlittenträger 9, welcher zufolge randseitiger Rippen Führungsnuten 23 ausbildet. Die Führungsnuten 23 sind aufeinander zugerichtet. Der Boden des Schlittenträgers 29 bildet zwei parallel zueinander verlaufende Durchtrittsöffnungen 12 aus. Diese sind als Längsschlitz gestaltet und erstrecken sich nahezu über die gesamte Länge des Schlittenträgers 9. Zwischen den beiden Durchtrittsöffnungen 12 befindet sich ein Längsschlitz 14, der insgesamt vier kreisförmige Rastnischen 13 aufweist, wobei eine Rastnische 13 am Ende des Längsschlitzes 14 angeordnet ist. Das andere Ende des Längsschlitzes 14 bildet eine schlüssellochförmige Öffnung 22 aus, durch die der Rastkopf 15' eines Raststiftes 15 passt.

Ein der Schmalseite des Schlittenträgers 9 zugeordneter Höcker bildet eine Gewindeöffnung für eine Gewindeschraube 25 aus. Mit der Gewindeschraube 25 ist ein Schwenkanschlag 11 vor Kopf des Schlittenträgers 9 schwenkbar befestigt.

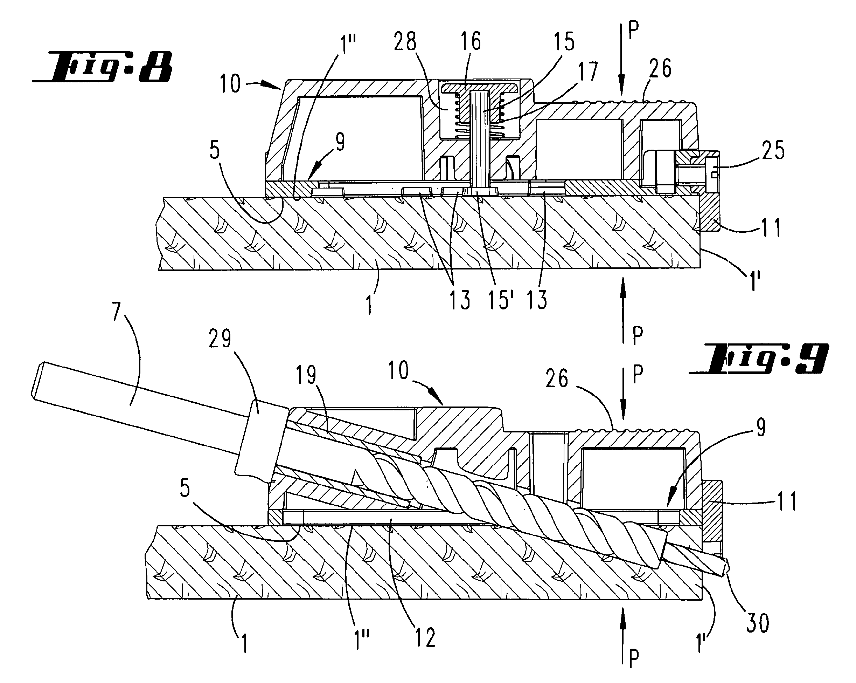

Der Schwenkanschlag 11 kann um die mittig der Schmalseite des Schlittenträgers 9 angeordnete Schraube 25 geschwenkt werden. In einer Anschlagstellung ragt ein mit Durchtrittsaussparungen 20 versehener Abschnitt des Schwenkanschlages 11 über die rückwärtige Anlagefläche 5 des Schlittenträgers 9, so dass diese, wie in den Figuren 8 und 9 dargestellt, gegen die Schmalseite 1' eines Werkstückes 1 gelegt werden kann, auf dessen Breitseitenfläche der Schlittenträger 9 mit seiner Anlagefläche liegt. In der um 180° geschwenkten Stellung kann die Frontseite des Schwenkanschlages 11 gemäß Figur 15 als Anschlag verwendet werden.

Die erfindungsgemäße Bohrlehre weist darüber hinaus einen Schlitten 10 auf. Dieser Schlitten 10 weist gegenüberliegende Führungsstege 24 aus, welche in die Führungsnuten 23 derart eingreifen, dass der Schlitten 10 innerhalb der im Wesentlichen U-förmigen Aussparung zwischen den beiden Randrippen des Schlittenträgers 9 geführt werden kann.

Der Schlitten 10 besitzt zwei parallel zueinander verlaufende Führungskanäle. Die Führungskanäle entspringen einer Schmalseite des Schlittens 10 und enden in dessen auf dem Boden des Schlittenträgers 9 aufliegenden Breitseite fluchtend zu den oben genannten Durchtrittsöffnungen 12. Zumindest der einsteckseitige Abschnitt des Führungskanales ist mit einer Metallhülse 19 ausgekleidet. Die Metallhülsen 19 stecken in den beiden parallel zueinander verlaufenden, spitzwinklig zur Breitseite ausgerichteten Führungskanälen.

Die Montage des Schlittens 10 auf dem Schlittenträger 9 erfolgt vor dem Verbinden des Raststiftes 15 mit einem ihm zugeordneten Drucktaster 16. Nach dem Einschieben des Schiebers 9 in die Führungsbahn des Schlittenträgers 9 wird der Raststift 15 von der Anlagefläche 5 her durch den Längsschlitz 14 in die ihm zugeordnete Bohrung des Schlittens 10 eingesteckt. Unter Zwischenlage einer sich auf dem Boden einer topfförmigen Aussparung 28 abstützenden Druckfeder 17 wird sodann der Drucktaster 16 aufgeschraubt oder aufgesteckt oder aufgeklebt.

Der Rastkopf 15' des Raststiftes 15 liegt dabei in einer der Rastnischen 13 derart ein, dass der Schlitten 10 nicht gegenüber dem Schlittenträger 9 verlagert werden kann.

Durch Druck auf den Drucktaster 16 tritt der Rastkopf 15' aus der ihm zugeordneten Rastnische 13 heraus. In dieser Position kann der Schlitten 10 zwischen zwei Endanschlagstellungen gegenüber dem Schlittenträger 9 verlagert werden. In einer ersten Endanschlagstellung liegt der Schlitten 10 in Anlage am Schwenkanschlag 11. In dieser Stellung steckt der Rastkopf 15' in der der schlüssellochförmigen Öffnung 22 nächstgelegenen Rastnische 13. Der andere Endanschlag wird von der am Ende des Längsschlitzes 14 angeordneten Rastnische 13 ausgebildet.

In jeder der insgesamt vier im Ausführungsbeispiel vorgesehenen Raststellungen mündet der Führungskanal in einem anderen Abstand zum Schwenkanschlag 11, so dass dadurch die Lage der Verbindungsschraube 3 in der Schmalseite 1' des Werkstückes 1 definiert werden kann. Bei dünnen Werkstücken 1 befindet sich der Schlitten 10 in der in Figur 9 dargestellten Anschlagstellung. Bei sehr dicken Werkstücken befindet sich der Schlitten 9 in einer Raststellung, wie sie in der Figur 15 dargestellt ist.

Eine der Anlagefläche 5 gegenüberliegende Spannzwingenansatzfläche 26 dient dazu, eine Spannzwinge anzusetzen, um einen in den Figur 8 und 9 mit P dargestellten Druck auszuüben, um die Bohrlehre auf der Breitseitenfläche 1' des Werkstückes 1 zu fixieren. Dies erfolgt in einer der beiden Anschlagstellungen, wie sie in den Figuren 9 bzw.15 dargestellt sind.

Die Funktionsweise der Vorrichtung ist die Folgende: Abhängig von der Materialstärke des Werkstückes 1 und der Art des Anschlages, ob die Front oder die Rückseite des Schwenkanschlages 11 als Anschlag dienen soll, wird der Schlitten 10 in eine entsprechende Raststellung gegenüber dem Schlittenträger 9 gebracht.

Sodann wird die Vorrichtung mit ihrer Anlagefläche 5 unter Verwendung entweder der Rückseite oder der Frontseite des Schwenkanschlages 11 als Anschlagfläche relativ zur Schmalseite 1' des Werkstückes 1 gebracht. Die Bohrlehre wird sodann unter Verwendung der Spannzwingenansatzfläche 26 mit einer Spannzwinge am Werkstück 1 fixiert. Sodann wird am Bohrer 7 mittels eines Tiefenanschlagringes 29 die Bohrtiefe festgelegt. Der in das Futter einer Bohrmaschine eingesteckte Bohrer 7 wird sodann in den Führungskanal eingeführt, um die Bohrung 4 zu bohren. Mit der abgesetzten Spitze 30 wird eine Findungsöffnung für die Spitze der Schraube 3 gefertigt.

In einer Spannstellung können zwei Parallelbohrungen gebohrt werden.

## Patentansprüche

1. Bohrlehre zum Fertigen von Schrägbohrungen für eine zwei Werkstücke (1, 2) an flächig aneinanderliegenden Verbindungsflächen (1', 2') miteinander verbindbare Schraube (3), mit einer an einer im Wesentlichen senkrecht zur Verbindungsfläche sich erstreckenden Breitseitenfläche (1") eines ersten Werkstückes (1) anlegbaren Anlagefläche (5), in welcher spitzwinklig mindestens ein Führungskanal für einen Bohrer (7) mündet, und mit Justierelementen, um die Anlagefläche (5) mit verschiedenen Abständen zur Mündungsöffnung des mindestens einen Führungskanals zum an die Verbindungsfläche (1') grenzenden Rand der Anlagefläche (5) zu positionieren, wobei die Anlagefläche (5) einem Schlittenträger (9) zugeordnet ist, auf dem ein parallel zur Anlagefläche (5) verschieblicher und in verschiedenen Positionen fixierbarer, den mindestens einen Führungskanal aufweisender Schlitten (10) angeordnet ist, **gekennzeichnet durch** einen dem Schlittenträger zugeordneten, mit Rastnischen (13) versehenen Längsschlitz (14), welcher von einem von der Breitseite des Schlittens (10) her zu betätigenden Raststift (15) durchgriffen ist, dessen Rastkopf (15') in eine der Rastnischen (13) einliegt, wobei der Rastkopf (15') **durch** Druck auf einen Drucktaster (16) gegen die Rückstellkraft einer Feder (17) aus der Rastnische herausverlagerbar ist.

2. Bohrlehre nach Anspruch 1, **gekennzeichnet durch** einen an dem zum Rand der Anlagefläche (5) weisenden Stirnseite angeordneter Schwenkanschlag (11), welcher in seiner Anschlagstellung gegen die Verbindungsfläche (1') bringbar ist.

3. Bohrlehre nach einem der vorhergehenden Ansprüche, **dadurch gekennzeichnet, dass** die Bohrlehre zwei parallele Führungskanäle aufweist und der Schlitten (10) zwei längsschlitzartige Durchtrittsöffnungen (12) für den Bohrer (7) aufweist.

4. Bohrlehre nach Anspruch 3, **dadurch gekennzeichnet, dass** der mit Rastnischen (13) versehene Längsschlitz (14) zwischen den beiden längsschlitzartigen Durchtrittsöffnungen (12) angeordnet ist.

5. Bohrlehre nach einem der vorhergehenden Ansprüche, **dadurch gekennzeichnet, dass** die in verschiedener Abstandslage zum Schwenkanschlag (11) angeordneten Rastnischen (13) zur Anlagefläche (5) hin offen sind und der Rastkopf (15') des Rastzapfens (15) zum Austritt aus der Rastnische (13) die Anlagefläche (5) kreuzen muss.

6. Bohrlehre nach einem der vorhergehenden Ansprüche, **gekennzeichnet durch** auf dem Schlitten (10) oder dem Schlittenträger (9) angeordnete Markierungen (18) zur Kennzeichnung der Materialstärken der zu bearbeitenden Werkstücke (1).

7. Bohrlehre nach einem der vorhergehenden Ansprüche, **dadurch gekennzeichnet, dass** die Führungskanäle zumindest im Einsteckbereich mit einem harten Werkstoff, insbesondere Metall ausgekleidet sind.

8. Bohrlehre nach einem der vorhergehenden Ansprüche, **dadurch gekennzeichnet, dass** der Schwenkanschlag (11) zwei Durchtrittsaussparungen (20) für die Bohrer (7) aufweise.

9. Bohrlehre nach einem der vorhergehenden Ansprüche, **dadurch gekennzeichnet, dass** der Schlitten (10) randseitig geführt ist und der den Längsschlitz (14) durchgreifende Rastzapfen (15) mit dem Ende des Längsschlitzes einen Bewegungsendanschlag (21) für den Schlitten (10) ausbildet.

10. Bohrlehre nach einem der vorhergehenden Ansprüche, **dadurch gekennzeichnet, dass** der Schwenkanschlag (11) einen Bewegungsendanschlag für den Schlitten (10) ausbildet.

11. Bohrlehre nach einem der vorhergehenden Ansprüche, **gekennzeichnet durch** eine schlüssellochförmige Öffnung (22) im Endbereich des Längsschlitzes, **durch** welche der Rastkopf (15') des Rastzapfens (15) bei der Montage von Schlitten (10) und Schlittenträger (9) durchsteckbar ist.

## Claims

1. Drill jig for producing oblique bores for a screw (3) capable of binding two workpieces (1, 2) to one another at joining surfaces (1', 2') lying flat against one another, having a contact surface (5) that can be laid against a broad end face (1'') of a first workpiece (1) extending substantially perpendicular to the joining surface in which contact surface at least one guide channel for a drill (7) runs at an acute angle and having adjusting elements to position the contact surface (5) at different spacings from the orifice opening of the at least single guide channel relative to the edge of the contact surface (5) adjoining the joining surface (1'), wherein the contact surface (5) is associated with a carriage support (9) on which a carriage (10) displaceable parallel to the contact surface (5), fixable in different positions and comprising the at least single guide channel is arranged, **characterised by** a longitudinal slot (14) associated with the carriage support and provided with locking niches (13) through which slot a locking pin (15) to be actuated by the broad side of the carriage (10) engages whose locking head (15') lodges in one of the locking niches (13), wherein the locking head (15') is displaceable out of the locking niche against the restoring force of a spring (17) by pressure applied to a pushbutton (16).

2. Drill jig according to claim 1, **characterised by** a pivot stop (11) arranged on the end face pointing to the edge of the contact surface (5) which stop in its stop position is movable towards the joining surface (1').

3. Drill jig according to any of the preceding claims, **characterised in that** the drill jig comprises two parallel guide channels and the carriage (10) has two longitudinal slot-like passage openings (12) for the drill (7).

4. Drill jig according to claim 3, **characterised in that** the longitudinal slot (14) provided with locking niches (13) is arranged between the two longitudinal slot-like passage openings (12).

5. Drill jig according to any of the preceding claims, **characterised in that** the locking niches (13) arranged at different spacings from the pivot stop (11) are open towards the contact surface (5) and the locking head (15') of the locking pin (15) must intersect the contact surface (5) for exit from the locking niche (13).

6. Drill jig according to any of the preceding claims, **characterised by** markings (18) arranged on the carriage (10) or the carriage support (9) for identifying the thicknesses of the material of the workpieces (1) to be machined.

7. Drill jig according to any of the preceding claims, **characterised in that** the guide channels are lined at least in the insertion region with a hard material, in particular metal.

8. Drill jig according to any of the preceding claims, **characterised in that** the pivot stop (11) has two passage recesses (20) for the drills (7).

9. Drill jig according to any of the preceding claims, **characterised in that** the carriage (10) is guided by its edges and the locking pin (15) engaging through the longitudinal slot (14) together with the end of the longitudinal slot forms a movement stop (21) for the carriage (10).

10. Drill jig according to any of the preceding claims, **characterised in that** the pivot stop (11) forms a movement stop for the carriage (10).

11. Drill jig according to any of the preceding claims, **characterised by** a keyhole-shaped opening (22) in the end region of the longitudinal slot through which the locking head (15') of the locking pin (15) can be plugged in during assembly of the carriage (10) and carriage support (9).

## Revendications

1. Gabarit de perçage pour la réalisation de forures obliques pour une vis (3) destinée à assembler deux pièces (1, 2) sur des surfaces d'assemblage (1',2') en appui plan l'une sur l'autre, comportant une surface d'appui (5), qui peut être appliquée contre une face de côté large (1"), orientée sensiblement perpendiculairement à la surface d'assemblage, d'une première pièce (1) et dans laquelle débouche en formant un angle aigu au moins un conduit de guidage pour un foret (7), et comportant des éléments d'ajustage pour positionner la surface d'appui (5) à différentes distances de l'embouchure dudit au moins un conduit de guidage par rapport au bord de la surface d'appui (5), adjacent à la surface d'assemblage (1'), un support de coulisseau (9) étant associé à la surface d'appui (5), sur lequel est disposé un coulisseau (10), muni dudit au moins un conduit de guidage, mobile parallèlement à la surface d'appui (5) et pouvant être immobilisé dans différentes positions, **caractérisé par** une fente longitudinale (14), qui est associée au support de coulisseau et est munie de niches d'arrêt (13) et à travers laquelle passe un boulon d'arrêt (15), à manoeuvrer depuis le côté large du coulisseau (10) et dont la tête d'arrêt (15') est engagée dans l'une des niches d'arrêt (13), la tête d'arrêt (15') pouvant être déplacée hors de la niche d'arrêt sous l'effet d'une pression exercée sur un bouton poussoir (16) dans le sens opposé à la force de rappel d'un ressort (17).

2. Gabarit de perçage selon la revendication 1, **caractérisé par** une butée pivotante (11) qui est disposée sur la face frontale orientée vers le bord de la surface d'appui (5) et laquelle peut être amenée dans sa position de butée contre la surface d'assemblage (1').

3. Gabarit de perçage selon l'une quelconque des revendications précédentes, **caractérisé en ce que** le gabarit de perçage comporte deux conduits de guidage parallèles et le coulisseau (10) comporte deux trous débouchants (12) oblongs pour le foret (7).

4. Gabarit de perçage selon la revendication 3, **caractérisé en ce que** la fente longitudinale (14) munie des niches d'arrêt (13) est réalisée entre les deux trous débouchants (12) oblongs.

5. Gabarit de perçage selon l'une quelconque des revendications précédentes, **caractérisé en ce que** les niches d'arrêt (13), agencées à des distances différentes de la butée pivotante (11), sont ouvertes vers la surface d'appui (5), et la tête d'arrêt (15) du boulon d'arrêt (15) doit croiser la surface d'appui (5) pour sortir de la niche d'arrêt (13).

6. Gabarit de perçage selon l'une quelconque des revendications précédentes, **caractérisé par** des marquages (18), réalisés sur le coulisseau (10) ou le support de coulisseau (9), en vue de détecter l'épaisseur du matériau de la pièce (1) à assembler.

7. Gabarit de perçage selon l'une quelconque des revendications précédentes, **caractérisé en ce que** les conduits de guidage sont revêtus, au moins dans la zone d'enfichage, par un matériau dur, en particulier un métal.

8. Gabarit de perçage selon l'une quelconque des revendications précédentes, **caractérisé en ce que** la butée pivotante (11) comporte deux évidements débouchants (20) pour les forets (7).

9. Gabarit de perçage selon l'une quelconque des revendications précédentes, **caractérisé en ce que** le coulisseau (10) est guidé du côté du bord, et le boulon d'arrêt (15), passant à travers la fente longitudinale (14), forme avec l'extrémité de la fente longitudinale une butée de déplacement (21) pour le coulisseau (10).

10. Gabarit de perçage selon l'une quelconque des revendications précédentes, **caractérisé en ce que** la butée pivotante (11) forme une butée de déplacement pour le coulisseau (10).

11. Gabarit de perçage selon l'une quelconque des revendications précédentes, **caractérisé par** un orifice (22) en forme de trou de serrure dans la zone d'extrémité de la fente longitudinale, à travers laquelle la tête d'arrêt (15') du boulon d'arrêt (15) peut être enfichée lors du montage du coulisseau (10) et du support de coulisseau (9).
